# EUROPÄISCHE PATENTANMELDUNG

(11) **EP 4 641 841 A1**
(43) Veröffentlichungstag der Anmeldung: **29.10.2025**
(21) Anmeldenummer: 24172397.2
(22) Anmeldetag: 25.04.2024
(51) Int. Cl.: H01R 4/36, H01R 4/70, H02G 15/115

(54) **SCHRAUBVERBINDER FÜR KABEL BEI NENNSPANNUNGEN BIS 1 KV MIT EINER ISOLIERKÖRPERANORDNUNG SOWIE ISOLIERKÖRPERANORDNUNG FÜR EINEN DERARTIGEN SCHRAUBVERBINDER**

(71) Anmelder: Arcus Elektrotechnik Alois Schiffmann GmbH, 81673 München (DE)
(72) Erfinder: Amann, Peter, 82008 Unterhaching (DE); Ordner, Gerd, 84478 Waldkraiburg (DE)
(74) Vertreter: Meissner Bolte Partnerschaft mbB

(57) **Zusammenfassung**

Die Erfindung betrifft einen Schraubverbinder für Kabel bei Nennspannungen bis 1 kV (Niederspannung), wobei der Schraubverbinder einen Verbinderkörper zur Aufnahme von zu verbindenden Kabelenden und Klemmschrauben aufweist. Erfindungsgemäß ist insbesondere vorgesehen, dass der Schraubverbinder eine Isolierkörperanordnung (1) aus einem ersten Isolierkörper (2) und einem hiervon separat ausgeführten zweiten Isolierkörper (3) aufweist, wobei der erste Isolierkörper (2) einen hülsenförmigen Grundkörper (4) aus einem elektrisch isolierenden Material aufweist, von welchem ein erster Bereich des Verbinderkörpers aufgenommen oder aufnehmbar ist, und wobei der zweite Isolierkörper (3) einen hülsenförmigen Grundkörper (5) aus einem elektrisch isolierenden Material aufweist, von welchem ein zweiter Bereich des Verbinderkörpers aufgenommen oder aufnehmbar ist.

## Beschreibung

Die vorliegende Erfindung betrifft einen Schraubverbinder für Kabel, und insbesondere einen Schraubverbinder für Kabel bei Nennspannungen bis 1 kV (Niederspannung).

Zur Herstellung einer Kabelverbindung von Energiekabeln für Nennspannungen bis 1 kV (Niederspannung) werden üblicherweise metallische hülsenförmige Verbinder eingesetzt. Die abisolierten Enden der zu verbindenden Leiter werden beidseitig in den Verbinder gesteckt. Eine mechanisch feste und elektrisch leitende Verbindung erfolgt durch Verpressen mit einem speziellen Presswerkzeug (Pressverbinder) oder durch Verschrauben mittels seitlich in dem Verbinder angeordneter Schrauben (Schraubverbinder). Das für die zuverlässige Verbindung erforderliche Drehmoment wird dabei entweder mit einem Drehmomentschlüssel oder durch den Abriss des Schraubenkopfs (Schraubenantriebs) beim Erreichen des erforderlichen Drehmomentwerts sichergestellt.

Die Schraubverbinder mit Abreißschraube gewinnen zunehmend an Akzeptanz bei den Anwendern, da sie im Gegensatz zu Pressverbindern, zur Montage kein Spezialwerkzeug erfordern. Außerdem kann ein bestimmter Schraubverbinder für mehrere Leiterquerschnitte eingesetzt werden. Man kann auch innerhalb des Querschnittsbereichs Kabel mit unterschiedlichem Querschnitt miteinander verbinden, was bei der Erweiterung bestehender Anlagen oft erforderlich ist.

Grundsätzlich sind Schraubverbinder der hier berücksichtigten Art in verschiedenen Bauformen bekannt, um Kabel an ihren Enden miteinander zu verbinden oder um Abzweigungen von Kabeln zu realisieren. Der Innendurchmesser des hohlen Verbinderkörpers des Schraubverbinders begrenzt dabei den maximal verklemmbaren Kabeldurchmesser. Wenn Kabel mit kleinerem Querschnitt zu verklemmen sind, wird die Klemmschraube entsprechend weit in den Innenraum des Verbinderkörpers hineingeschraubt, wobei das jeweilige Kabelende an der der Klemmschraube gegenüberliegenden Seite gegen die Innenwand des Verbinderkörpers gepresst wird.

Zum Wiederaufbau der elektrischen Isolierung und des mechanischen Außenschutzes müssen die metallischen Verbinder und die angrenzenden Leiterabschnitte im abgemantelten Bereich mit geeigneten Isolierstoffen umhüllt werden.

Dies erfolgt beispielsweise mit Gießharz, insbesondere Epoxidharz oder Polyurathanharz. Dazu werden die einzelnen Leiter des Kabels distanziert und der so vorbereitete Spleiß mit einer entsprechend geformten Kunststoffschale umhüllt, in welche die vorher gemischten Komponenten aus Harz und Härter gefüllt werden. Vorteilhaft ist bei diesem Verfahren, dass der so entstandene Gießharzkörper die Funktionen "elektrisch isolieren", "gegen Wasser dichten" und "mechanisch schützen" gewährleistet.

Nachteilig ist aber das relativ hohe Montagefehlerrisiko durch ungenügende Vermischung der Harzkomponenten in insbesondere 2-Kammerbeuteln oder anderen Gebindeformen, der Gehalt an Isocyanat mit Gesundheitsgefährdung, und gelegentlich auftretende Undichtigkeiten an ungünstig gestalteten oder falsch montierten Gießharzschalen.

Als Vergussmasse kommen auch Stoffe auf Bitumenbasis und in jüngster Zeit auch Gele, beispielsweise Silikongel, zum Einsatz. In diesen Fällen muss die Schale mechanisch stabil sein, um einen dauerhaften Außenschutz zu gewährleisten.

In einem anderen Verfahren werden die einzelnen Verbinder mit Warmschrumpfschläuchen umhüllt. Anschließend wird der Spleiß ebenfalls mit einem Warmschrumpfschlauch umhüllt, der in seinen beiden Randbereichen den noch unverletzten Kabelmantel überlappt.

Diese Lösung ist kostengünstiger als die Gießharzvariante und enthält keine gesundheitsgefährdenden Stoffe. Es ist jedoch nachteilig, dass die inneren Warmschrumpfschläuche vor der Montage der Verbinder in eine Parkposition auf den weiter abgemantelten Aderenden eines der beiden Kabel geschoben werden müssen. Auch der äußere Schutzschlauch muss in seine solche Parkposition gebracht werden. Lediglich bei Verwendung von Schrumpfmanschetten entfällt dieser Nachteil für die Montage des äußeren Schutzes.

Eine derartige Verwendung von isolierenden Schrumpfschläuchen oder radial schrumpfbaren Muffen ist unter anderem aus der Druckschrift DE 44 17 363 A1 und der Druckschrift DE 195 13 618 A1 bekannt.

Ein wesentlicher Nachteil bei den aus diesem Stand der Technik bekannten Ansätzen ist jedoch die zum Schrumpfen erforderliche Wärmequelle, wozu überwiegend Gasflammen eingesetzt werden. Bei unsachgemäßer Anwendung können Beschädigungen an der Kabel- und/oder Muffenisolierung auftreten.

Auf Grundlage dieser Problemstellung liegt der vorliegenden Erfindung die Aufgabe zu Grunde, einen Schraubverbinder der eingangs genannten Art für Kabel bei Nennspannungen bis 1 kV (Niederspannung) anzugeben, wobei in einer einfach zu realisierenden aber dennoch effektiven Art eine möglichst optimale Isolierung des Schraubverbinders ermöglicht wird.

Insbesondere soll eine Isolierkörperanordnung für einen Schraubverbinder der zuvor genannten Art angegeben werden, welcher einfach zu montieren ist, und wobei in einer einfach zu realisierenden Art das elektrische Kontaktieren zwischen zwei benachbarten Schraubverbindern verhindert wird.

Die der Erfindung zu Grunde liegende Aufgabe wird insbesondere durch einen Schraubverbinder gemäß dem unabhängigen Patentanspruch 1 gelöst, wobei vorteilhafte Weiterbildungen des erfindungsgemäßen Schraubverbinders in den abhängigen Ansprüchen angegeben sind.

Demnach betrifft die Erfindung insbesondere einen Schraubverbinder für Kabel bei Nennspannungen bis 1 kV (Niederspannung), wobei der Schraubverbinder einen zumindest teil- und/oder bereichsweise hohen und im Wesentlichen zylinderförmigen Verbinderkörper zur Aufnahme von zu verbindenden Kabelenden sowie Klemmschrauben aufweist, die in den Verbinderkörper quer oder senkrecht zu der Längserstreckungsrichtung des Verbinderkörpers eingeschraubt oder einschraubbar sind.

Erfindungsgemäß ist insbesondere vorgesehen, dass der Schraubverbinder eine Isolierkörperanordnung aufweist. Die Isolierkörperanordnung dient insbesondere zur Herstellung einer Niederspannungskabelgarnitur vorzugsweise mit selbsthaltendem, elektrisch isolierendem Verschluss, beispielsweise zur Aufnahme von Kabelverbindungen.

Die Isolierkörperanordnung des erfindungsgemäßen Schraubverbinders weist im Wesentlichen einen ersten Isolierkörper und einen hiervon separat ausgeführten zweiten Isolierkörper auf. Mit anderen Worten, die Isolierkörperanordnung ist zwei- oder mehrteilig aufgebaut.

Der erste Isolierkörper der Isolierkörperanordnung weist einen zumindest teil- und/oder bereichsweise hülsenförmigen Grundkörper aus einem elektrisch isolierenden Material, insbesondere Kunststoffmaterial, auf. Von dem hülsenförmigen Grundkörper des ersten Isolierkörpers ist ein erster Bereich, insbesondere ein erster Endbereich, des Verbinderkörpers des Schraubverbinders aufgenommen oder aufnehmbar.

In gleicher Weise umfasst der zweite Isolierkörper der Isolierkörperanordnung einen zumindest teil- und/oder bereichsweise hülsenförmigen Grundkörper ebenfalls aus einem elektrisch isolierenden Material, insbesondere Kunststoffmaterial, von welchem ein zweiter Bereich, insbesondere ein zweiter Endbereich, des Verbinderkörpers des Schraubverbinders aufgenommen oder aufnehmbar ist.

Nach der Konzeption der Erfindung werden somit der Schraubverbinder mit dem Verbinderkörper und die Isolierkörperanordnung mit dem ersten und zweiten Isolierkörper getrennt bereitgestellt. Vor der Montage des Schraubverbinders werden die Isolierkörper der Isolierkörperanordnung auf den Verbinderkörper des Schraubverbinders gesteckt, um so einen den Verbinderkörper des Schraubverbinders umhüllenden Isolierkörper bereitzustellen. Es handelt sich hierbei um eine einfach zu montierende Isolierkörperanordnung bei einer besonders kompakten Form.

Mit der erfindungsgemäßen Isolierkörperanordnung wird nicht nur eine mechanische und einfache Umkapselung des Verbinderkörpers des Schraubverbinders und der zu verbindenden Kabelenden bereitgestellt, sondern vielmehr wird auch permanent ein elektrisches Kontaktieren zwischen zwei benachbarten Schraubverbindern verhindert.

Insbesondere ist die Isolierkörperanordnung nachträglich und/oder austauschbar mit dem Verbinderkörper des Schraubverbinders verbindbar.

Gemäß bevorzugten Realisierungen des erfindungsgemäßen Schraubverbinders ist vorgesehen, dass der erste Isolierkörper der Isolierkörperanordnung einen Verbindungsbereich aufweist, welcher ausgebildet ist, mit einem Verbindungsbereich des zweiten Isolierkörpers der Isolierkörperanordnung eine kraft- und/oder formschlüssige Verbindung auszubilden. Vorzugweise handelt es sich bei dieser Verbindung um eine insbesondere lösbare Verbindung.

Dabei sollte vorzugsweise der Verbindungsbereich des ersten Isolierkörpers der Isolierkörperanordnung zumindest teil- und/oder bereichsweise komplementär zu dem Verbindungsbereich des zweiten Isolierkörpers der Isolierkörperanordnung ausgeführt sein.

Gemäß Ausführungsformen des erfindungsgemäßen Schraubverbinders ist vorgesehen, dass zumindest in einem Zustand, wenn der erste Bereich, insbesondere Endbereich, des Verbinderkörpers des Schraubverbinders von dem Grundkörper des ersten Isolierkörpers der Isolierkörperanordnung und der zweite Bereich, insbesondere Endbereich, des Verbinderkörpers des Schraubverbinders von dem Grundkörper des zweiten Isolierkörpers der Isolierkörperanordnung aufgenommen ist, der Verbindungsbereich des ersten Isolierkörpers zumindest teil- oder bereichsweise koaxial und/oder konzentrisch zu dem Verbindungsbereich des zweiten Isolierkörpers ausgeführt ist.

Insbesondere in einer Ausführungsvariante der zuletzt genannten Ausführungsform des erfindungsgemäßen Schraubverbinders ist vorgesehen, dass der Verbindungsbereich des ersten Isolierkörpers zumindest teil- und/oder bereichsweise teleskopisch zu dem Verbindungsbereich des zweiten Isolierkörpers ausgeführt ist.

Diese Ausgestaltung der Verbindungsbereiche der Isolierkörper der Isolierkörperanordnung garantiert zumindest bereichsweise eine Überlappung der entsprechenden Verbindungsbereiche, infolgedessen in einer leicht zu realisierenden aber dennoch effektiven Art, der Verbinderkörper des Schraubverbinders vor Feuchtigkeit geschützt werden kann.

Gemäß Realisierungen des erfindungsgemäßen Schraubverbinders ist vorgesehen, dass der Grundkörper des ersten Isolierkörpers der Isolierkörperanordnung einen ersten Endbereich aufweist, welcher in einem Zustand, wenn der erste Bereich, insbesondere Endbereich, des Verbinderkörpers des Schraubverbinders von dem Grundkörper des ersten Isolierkörpers der Isolierkörperanordnung aufgenommen ist, in Richtung des zweiten Bereichs, insbesondere Endbereichs, des Verbinderkörpers des Schraubverbinders zeigt.

Andererseits weist der Grundkörper des zweiten Isolierkörpers der Isolierkörperanordnung einen ersten Endbereich auch, welcher in einem Zustand, wenn der zweite Bereich, insbesondere Endbereich, des Verbinderkörpers des Schraubverbinders von dem Grundkörper des zweiten Isolierkörpers der Isolierkörperanordnung aufgenommen ist, in Richtung des ersten Bereichs, insbesondere Endbereichs, des Verbinderkörpers des Schraubverbinders zeigt.

In diesem Zusammenhang bietet es sich an, dass die Isolierkörperanordnung derart ausgeführt ist, dass in einem Zustand, wenn der erste Bereich, insbesondere Endbereich, des Verbinderkörpers des Schraubverbinders von dem Grundkörper des ersten Isolierkörpers der Isolierkörperanordnung und der zweite Bereich, insbesondere Endbereich, des Isolierkörpers des Schraubverbinders von dem Grundkörper des zweiten Isolierkörpers der Isolierkörperanordnung aufgenommen ist, der erste Endbereich des Grundkörpers des ersten Isolierkörpers der Isolierkörperanordnung an den ersten Endbereich des Grundkörpers des zweiten Isolierkörpers der Isolierkörperanordnung anstößt oder zumindest unmittelbar angrenzt.

Gemäß Ausführungsvarianten des erfindungsgemäßen Schraubverbinders ist vorgesehen, dass der Verbindungsbereich des ersten Isolierkörpers an dem ersten Endbereich des Grundkörpers des ersten Isolierkörpers der Isolierkörperanordnung ausgebildet und insbesondere integral angeformt ist und sich vorzugsweise in Richtung des zweiten Bereichs, insbesondere Endbereichs, des Verbinderkörpers des Schraubverbinders erstreckt.

Alternativ oder zusätzlich hierzu ist vorzugsweise vorgesehen, dass der Verbindungsbereich des zweiten Isolierkörpers der Isolierkörperanordnung an dem ersten Endbereich des Grundkörpers des zweiten Isolierkörpers der Isolierkörperanordnung ausgebildet und insbesondere integral angeformt ist und sich vorzugsweise in Richtung des ersten Bereichs, insbesondere Endbereichs, des Verbinderkörpers des Schraubverbinders erstreckt.

Gemäß Ausführungsvarianten des erfindungsgemäßen Schraubverbinders ist der Grundkörper des ersten Isolierkörpers der Isolierkörperanordnung derart ausgebildet, dass dieser insbesondere austauschbar auf den ersten Bereich, insbesondere Endbereich, des Verbinderkörpers des Schraubverbinders steckbar ist. Dabei sollte die Steckverbindung derart ausgeführt sein, dass zwischen dem Grundkörper des ersten Isolierkörpers und dem ersten Bereich des Verbinderkörpers kein Luftspalt mehr vorhanden ist.

In gleicher Weise ist es von Vorteil, dass der Grundkörper des zweiten Isolierkörpers der Isolierkörperanordnung derart ausgebildet ist, dass dieser insbesondere austauschbar auf den zweiten Bereich, insbesondere Endbereich, des Isolierkörpers steckbar ist, und zwar wiederum vorzugsweise ohne einen Luftspalt zwischen dem zweiten Isolierkörper der Isolierkörperanordnung und dem Verbinderkörper des Schraubverbinders.

Gemäß bevorzugten Realisierungen des erfindungsgemäßen Schraubverbinders ist vorgesehen, dass in dem ersten Bereich des Verbinderkörpers des Schraubverbinders ein quer oder senkrecht zur Schraubverbinder-Längsachse ausgeführter Schraubschacht ausgeführt ist, in den eine Klemmschraube eingeschraubt oder einschraubbar ist, wobei in einer Mantelfläche des zumindest teil- und/oder bereichsweise hülsenförmigen Grundkörpers des ersten Isolierkörpers der Isolierkörperanordnung eine Durchgangsöffnung ausgeführt ist.

Die in der Mantelfläche des zumindest teil- und/oder bereichsweise hülsenförmigen Grundkörpers des ersten Isolierkörpers ausgeführte Durchgangsöffnung ist insbesondere derart ausgeführt, dass diese es gestattet, dass die Klemmschraube durch die Durchgangsöffnung zum Einschrauben in den Schraubschacht des Verbinderkörpers führbar ist.

Alternativ oder zusätzlich hierzu ist die in der Mantelfläche des zumindest teil- und/oder bereichsweise hülsenförmigen Grundkörpers des ersten Isolierkörpers der Isolierkörperanordnung ausgeführte Durchgangsöffnung derart ausgebildet, dass über diese die Klemmschraube zum Einschrauben in den Schraubschacht des Verbinderkörpers des Schraubverbinders entsprechend manipulierbar ist.

Gleiches gilt vorzugsweise ebenfalls für den zweiten Isolierkörper der Isolierkörperanordnung.

Mit anderen Worten, vorzugsweise ist in dem zweiten Bereich des Verbinderkörper des Schraubverbinders ein quer oder senkrecht zur Schraubverbinder-Längsachse ausgeführter Schraubschacht ausgebildet, in den eine Klemmschraube eingeschraubt oder einschraubbar ist, wobei in einer Mantelfläche des zumindest teil- und/oder bereichsweise hülsenförmigen Grundkörpers des zweiten Isolierkörpers der Isolierkörperanordnung eine Durchgangsöffnung ausgeführt ist, durch welche eine Klemmschraube zum Einschrauben in den Schraubschacht im zweiten Bereich des Verbinderkörpers des Schraubverbinders führbar ist.

Alternativ oder zusätzlich kann über die in der Mantelfläche des zumindest teil- und/oder bereichsweise hülsenförmigen Grundkörpers des zweiten Isolierkörpers der Isolierkörperanordnung ausgeführten Durchgangsöffnung die Klemmschraube zum Einschrauben in den Schraubschacht des zweiten Bereichs des Verbinderkörpers des Schraubverbinders manipulierbar sein.

Bei einer denkbaren Realisierung des erfindungsgemäßen Schraubverbinders ist vorgesehen, dass die Isolierkörperanordnung derart ausgeführt ist, dass in einem Zustand, wenn der erste Bereich, insbesondere Endbereich, des Verbinderkörpers des Schraubverbinders von dem Grundkörper des ersten Isolierkörpers der Isolierkörperanordnung und der zweite Bereich, insbesondere Endbereich, des Verbinderkörpers des Schraubverbinders von dem Grundkörper des zweiten Isolierkörpers der Isolierkörperanordnung aufgenommen ist, die in einer Mantelfläche des zumindest teil- und/oder bereichsweise hülsenförmigen Grundkörpers des ersten Isolierkörpers ausgeführte Durchgangsöffnung mit dem in dem ersten Bereich des Verbinderkörpers ausgeführten Schraubschacht fluchtet. Gleichzeitig sollte dabei die in der Mantelfläche des zumindest teil- und/oder bereichsweis hülsenförmigen Grundkörpers des zweiten Isolierkörpers der Isolierkörperanordnung ausgeführte Durchgangsöffnung mit dem in dem zweiten Bereich des Verbinderkörpers des Schraubverbinders ausgeführten Schraubschacht fluchten.

Insbesondere sind der erste und zweite Isolierkörper der Isolierkörperanordnung derart ausgeführt, dass in einem Zustand, wenn die beiden Isolierkörper miteinander (bestimmungsgemäß) verbunden sind, die jeweiligen in den Mantelflächen des ersten und zweiten Isolierkörpers ausgeführten Durchgangsöffnungen auf einer im Hinblick auf die Schraubverbinder-Längsachse gemeinsamen Linien liegen.

Hierzu sind die entsprechenden Verbindungsbereiche des ersten und zweiten Isolierkörpers der Isolierkörperanordnung vorzugsweise mit einem auf dem Poka-Yoke-Prinzip basierenden Ausrichtungshilfe versehen, mit welcher garantiert wird, dass in einem verbundenen Zustand der beiden Isolierkörper der Isolierkörperanordnung die in den entsprechenden Mantelflächen der Isolierkörper vorgesehenen Durchgangsöffnungen gemeinsam mit den entsprechenden Schraubschächten in den ersten und zweiten Bereich des Verbinderkörpers des Schraubverbinders fluchten.

Gemäß einem weiteren Aspekt der vorliegenden Erfindung ist vorgesehen, dass der zumindest teil- und/oder bereichsweise hülsenförmige Grundkörper des ersten Isolierkörpers der Isolierkörperanordnung an einem ersten Endbereich eine Aufnahmeöffnung aufweist, über welcher der erste Bereich, insbesondere Endbereich, des Verbinderkörpers des Schraubverbinders in den Grundkörper des ersten Isolierkörpers einführbar ist. Andererseits weist der zumindest teil- und/oder bereichsweise hülsenförmige Grundkörper des ersten Isolierkörpers der Isolierkörperanordnung des erfindungsgemäßen Schraubverbinders an einem dem ersten Endbereich gegenüberliegenden zweiten Endbereich eine Durchgangsöffnung auf, durch welche ein Kabelende der beiden zu verbindenden Kabelenden führbar ist.

Gleiches gilt vorzugsweise auch im übertragenen Sinne für den zumindest teil- und/oder bereichsweise hülsenförmigen Grundkörper des zweiten Isolierkörpers der Isolierkörperanordnung des erfindungsgemäßen Schraubverbinders.

Die Erfindung betrifft vielmehr eine Isolierkörperanordnung für einen Schraubverbinder der zuvor beschriebenen erfindungsgemäßen Art, wobei die Isolierkörperanordnung aus einem ersten Isolierkörper und einem hiervon separat ausgeführten zweiten Isolierkörper besteht.

Nachfolgend wird eine bevorzugte Ausführungsform der Erfindung unter Bezugnahme auf die beiliegenden Zeichnungen näher beschrieben.

Es zeigen:
- FIG. 1: schematisch und jeweils in einer isometrischen Ansicht eine exemplarische Ausführungsform einer Isolierkörperanordnung des erfindungsgemäßen Schraubverbinders bestehend aus einem ersten Isolierkörper und einem hiervon separat ausgeführten zweiten Isolierkörper;
- FIG. 2a: schematisch und in einer isometrischen Ansicht der erste und zweite Isolierkörper der Isolierkörperanordnung gemäß FIG. 1 in einem Zustand, bevor die Isolierkörper miteinander verbunden werden/verbunden sind;
- FIG. 2b: schematisch und in einer teil-transparenten Darstellung die Isolierkörperanordnung gemäß FIG. 2a;

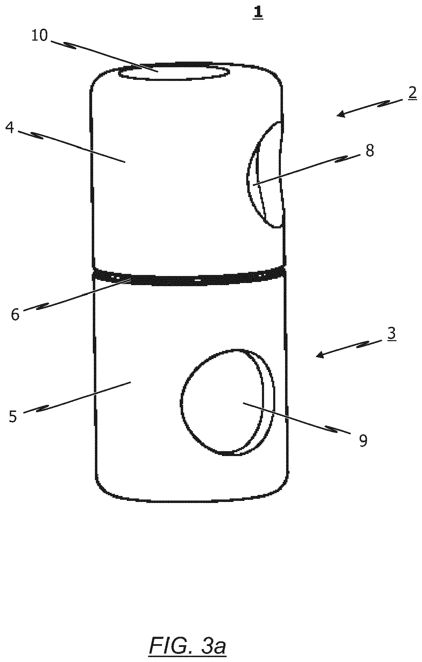

- FIG. 3a: schematisch und in einer isometrischen Ansicht die Isolierkörperanordnung gemäß FIG. 2a, und zwar in einem Zustand, in welchem der erste und zweite Isolierkörper der Isolierkörperanordnung miteinander verbunden, allerdings noch nicht miteinander verrastet sind;

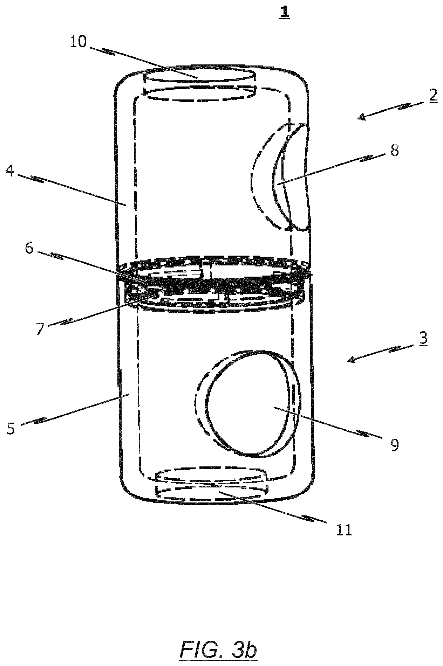

- FIG. 3b: schematisch und in einer teil-transparenten Darstellung die Isolierkörperanordnung gemäß FIG. 3a;
- FIG. 4a: schematisch und in einer isometrischen Ansicht die Isolierkörperanordnung gemäß FIG. 3a, und zwar in einem Zustand, in welchem die beiden Isolierkörper der Isolierkörperanordnung - ausgehend von dem in FIG. 3a gezeigten Zustand - miteinander verrastet sind; und
- FIG. 4b: schematisch und in einer teil-transparenten Darstellung die Isolierkörperanordnung gemäß FIG. 4a.

Eine exemplarische Ausführungsform der erfindungsgemäßen Isolierkörperanordnung 1 wird nachfolgend unter Bezugnahme auf die beiliegenden Zeichnungen näher beschrieben.

Im Einzelnen dient die exemplarische Ausführungsform der erfindungsgemäßen Isolierkörperanordnung 1 zum elektrischen Isolieren eines Schraubverbinders für Kabel bei Nennspannungen bis 1 kV (Niederspannung). Obgleich in den Zeichnungen nicht gezeigt, weist der Schraubverbinder vorzugsweise einen zumindest teil- oder bereichsweise hohlen und im Wesentlichen zylinderförmigen Verbinderkörper auf, der dazu dient, die zu verbindenden Kabelenden aufzunehmen.

Ebenfalls ist in den Zeichnungen nicht dargestellt, dass der Schraubverbinder vorzugsweise ferner Klemmschrauben aufweist, die in den Verbinderkörper des Schraubverbinders quer oder senkrecht zu der Längserstreckungsrichtung des Verbinderkörpers eingeschraubt oder einschraubbar sind.

Vielmehr ist in den Zeichnungen eine Ausführungsform der erfindungsgemäßen Isolierkörperanordnung 1 für einen solchen Schraubverbinder gezeigt.

Wie dargestellt, weist die exemplarische Ausführungsform der erfindungsgemäßen Isolierkörperanordnung 1 einen ersten Isolierkörper 2 und einen hiervon separat ausgeführten zweiten Isolierkörper 3 auf. Der erste Isolierkörper 2 und der zweite Isolierkörper 3 sind aus einem elektrisch isolierenden Material, insbesondere Kunststoffmaterial, gefertigt. Dies kann beispielsweise im Zuge eines Spritzguss-Prozesses erfolgen. Alternativ hierzu ist aber auch eine Fertigung im 3D-Druck oder als Drehteil denkbar.

Eine Fertigung als Drehteil ist insbesondere deshalb denkbar, da die Isolierkörper 2, 3 der Isolierkörperanordnung 1 insgesamt zumindest im Wesentlichen rotationssymmetrisch ausgeführt sind.

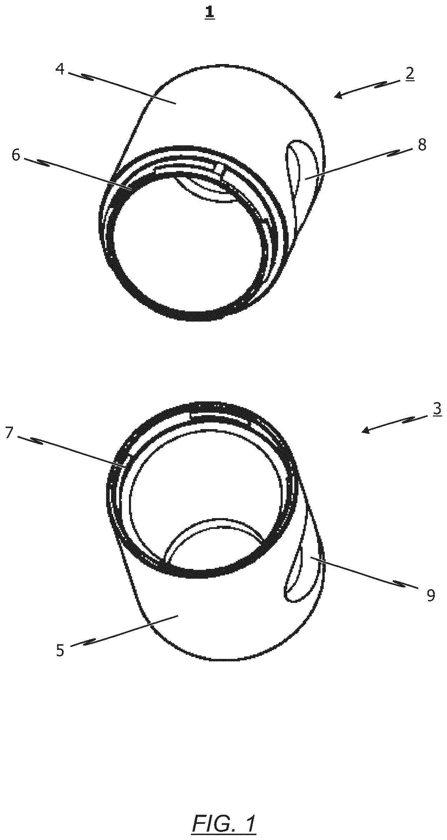

Wie insbesondere in FIG. 1 dargestellt, weist der erste Isolierkörper 2 der Isolierkörperanordnung 1 einen hülsenförmigen Grundkörper 4 auf, von welchem ein erster Bereich eines Verbinderkörpers des Schraubverbinders aufgenommen oder aufnehmbar ist. In gleicher Weise weist der zweite Isolierkörper 3 der Isolierkörperanordnung 1 einen hülsenförmigen Grundkörper 5 auf, von welchem ein zweiter Bereich, insbesondere Endbereich, des Verbinderkörpers des Schraubverbinders aufgenommen oder aufnehmbar ist.

Ebenfalls ist den beiliegenden Zeichnungen zu entnehmen, dass der erste Isolierkörper 2 der Isolierkörperanordnung 1 einen Verbindungsbereich 6 aufweist, welcher ausgebildet ist, mit einem Verbindungsbereich 7 des zweiten Isolierkörpers 3 der Isolierkörperanordnung 1 einen kraft- und/oder formschlüssige Verbindung und insbesondere eine lösbare kraft- und/oder formschlüssige Verbindung auszubilden.

Bei der in den Zeichnungen schematisch gezeigten Ausführungsvariante der Isolierkörperanordnung 1 kommt zum Ausbilden der insbesondere lösbaren kraft- und/oder formschlüssige Verbindung zwischen dem ersten Isolierkörper 2 und dem zweiten Isolierkörper 3 der Isolierkörperanordnung 1 insbesondere ein Bajonett-Verschluss zum Einsatz. Hierbei handelt es sich um eine herstell- und lösbare mechanische Verbindung zwischen dem ersten Isolierkörper 2 und dem zweiten Isolierkörper 3 in deren Längsachse. Die beiden Isolierkörper 2, 3 werden durch Ineinanderstecken und durch entgegengesetztes Drehen verbunden und so auch wieder getrennt.

Vorzugsweise ist dabei der Verbindungsmechanismus zwischen dem ersten Isolierkörper 2 und dem zweiten Isolierkörper 3 der Isolierkörperanordnung 1 derart ausgeführt, dass - gemäß dem Poka-Yoke-Prinzip - das endgültige Verbinden des ersten Isolierkörpers 2 und des zweiten Isolierkörpers 3 so erfolgt, dass - im endgültig verbundenen Zustand des ersten Isolierkörpers 2 und des zweiten Isolierkörpers 3 - der erste Isolierkörper 2 und der zweite Isolierkörper 3 zueinander eine festgelegte (definierte) Ausrichtung und Position aufweisen.

Insbesondere ist in diesem Zusammenhang vorgesehen, dass - wie in FIG. 1 angedeutet - der Verbindungsbereich 6 des ersten Isolierkörpers 2 zumindest teil- und/oder bereichsweise komplementär zu dem Verbindungsbereich 7 des zweiten Isolierkörpers 3 ausgeführt ist.

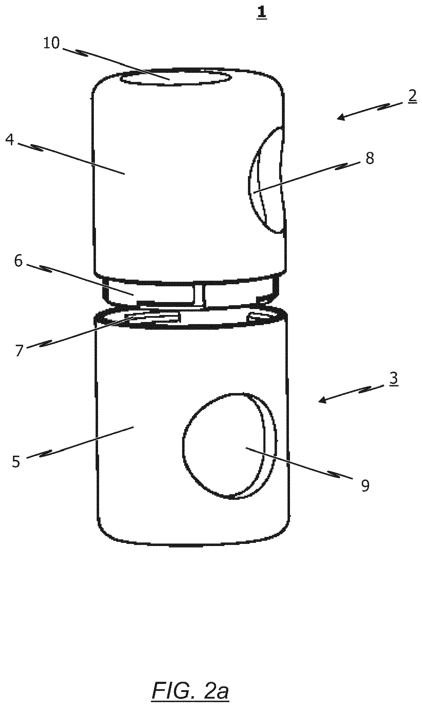

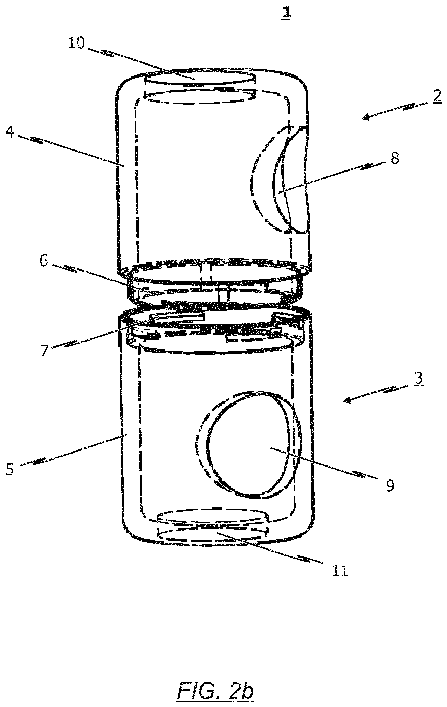

Ferner ist insbesondere den Darstellungen in FIG. 2a und FIG. 2b zu entnehmen, dass der Verbindungsbereich 6 des ersten Isolierkörpers 2 der Isolierkörperanordnung 1 zumindest teil- oder bereichsweise koaxial und/oder konzentrisch zu dem Verbindungsbereich 7 des zweiten Isolierkörpers 3 ausgeführt ist. Dabei ist insbesondere der Verbindungsbereich 6 des ersten Isolierkörpers 2 zumindest teil- oder bereichsweise teleskopisch zu dem Verbindungsbereich 7 des zweiten Isolierkörpers 3 ausgeführt.

Der Grundkörper 4 des ersten Isolierkörpers 2 der Isolierkörperanordnung 1 ist austauschbar auf einem Endbereich des Verbinderkörpers des Schraubverbinders steckbar. Gleiches gilt im übertragenen Sinne für den Grundkörper 5 des zweiten Isolierkörpers 3, welcher somit insbesondere austauschbar auf einen zweiten Bereich des Verbinderkörpers des Schraubverbinders steckbar ist.

Der Verbinderkörper des Schraubverbinders weist an seinem ersten und zweiten (End-) Bereich jeweils einen senkrecht oder quer zur Schraubverbinder-Längsachse ausgeführten Schraubschacht auf, in den eine Klemmschraube eingeschraubt oder einschraubbar ist.

Von daher ist bei der in den Zeichnungen gezeigten exemplarischen Ausführungsform der erfindungsgemäßen Isolierkörperanordnung 1 vorgesehen, dass in einer Mantelfläche des hülsenförmigen Grundkörpers 4 des ersten Isolierkörpers 2 sowie in einer Mantelfläche des hülsenförmigen Grundkörpers 5 des zweiten Isolierkörpers 3 jeweils eine Durchgangsöffnung 8, 9 ausgeführt ist, durch welche die Klemmschraube zum Einschrauben in den entsprechenden Schraubschacht des Verbinderkörpers des Schraubverbinders führbar ist oder über welche die Klemmschraube zum Einschrauben in den Schraubschacht des Verbinderkörpers des Schraubverbinders manipulierbar ist.

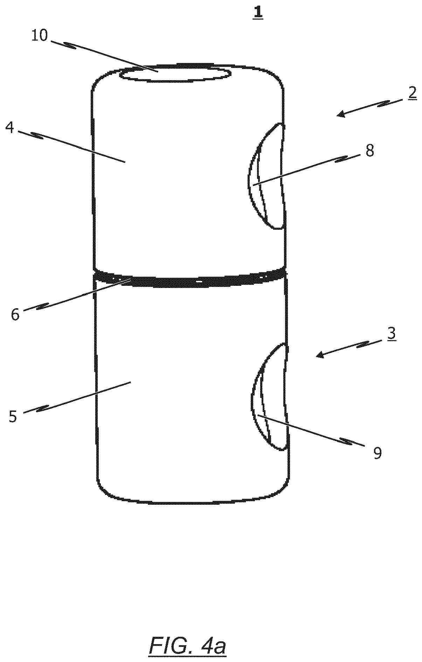

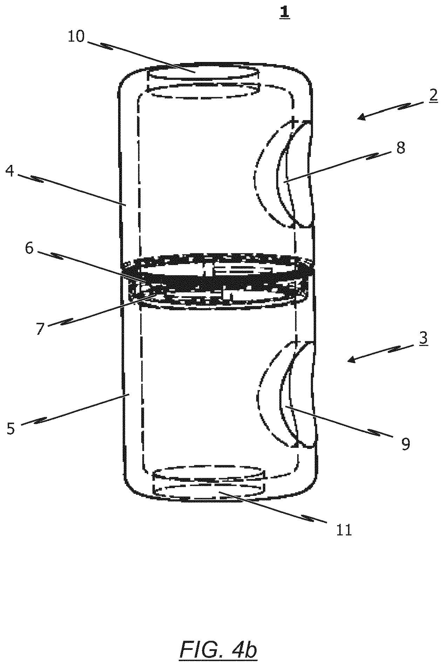

Daher ist insbesondere vorgesehen, dass insbesondere nach dem Poka-Yoke-Prinzip die in den entsprechenden Mantelflächen der Grundkörper 4 des ersten Isolierkörpers 2 und des zweiten Isolierkörpers 3 ausgeführten Durchgangsöffnungen 8, 9 im fertig zusammengebauten Zustand der Isolierkörperanordnung 1 (vgl. FIG. 4a und FIG. 4b) die Durchgangsöffnungen entlang einer Linie längs der Längserstreckungsrichtung der Isolierkörperanordnung 1 angeordnet sind.

Den beiliegenden Zeichnungen ist ferner zu entnehmen, dass sowohl der hülsenförmige Grundkörper 4 des ersten Isolierkörpers 2 der Isolierkörperanordnung 1 als auch der hülsenförmige Grundkörper 5 des zweiten Isolierkörpers 3 der Isolierkörperanordnung 1 jeweils an einem ersten Endbereich eine Aufnahmeöffnung aufweisen, über welche ein Bereich, insbesondere Endbereich, des Verbinderkörpers des Schraubverbinders in den entsprechenden Grundkörper 4, 5 des ersten bzw. zweiten Isolierkörpers 2, 3 einführbar ist.

An einem dem ersten Endbereich gegenüberliegenden zweiten Endbereich des entsprechenden hülsenförmigen Grundkörpers 4, 5 des ersten bzw. zweiten Isolierkörpers 2, 3 der Isolierkörperanordnung 1 ist jeweils eine Durchgangsöffnung 10, 11 ausgebildet, durch welche ein Kabelende der beiden mit Hilfe des Schraubverbinders zu verbindenden Kabelenden führbar ist.

Die Erfindung ist nicht auf die in den Zeichnungen gezeigte Ausführungsform beschränkt, sondern ergibt sich aus einer Zusammenschau sämtlicher hierin offenbarter Merkmale.

### Bezugszeichenliste

- 1: Isolierkörperanordnung
- 2: erster Isolierkörper
- 3: zweiter Isolierkörper
- 4: Grundkörper des ersten Isolierkörpers
- 5: Grundkörper des zweiten Isolierkörpers
- 6: Verbindungsbereich des ersten Isolierkörpers
- 7: Verbindungsbereich des zweiten Isolierkörpers
- 8: in der Mantelfläche des Grundkörpers des ersten Isolierkörpers ausgeführte Durchgangsöffnung
- 9: in der Mantelfläche des Grundkörpers des zweiten Isolierkörpers ausgeführte Durchgangsöffnung
- 10: Durchgangsöffnung für Kabelende im Grundkörper des ersten Isolierkörpers
- 11: Durchgangsöffnung für Kabelende im Grundkörper des zweiten Isolierkörpers

## Patentansprüche

1. Schraubverbinder für Kabel bei Nennspannungen bis 1 kV (Niederspannung), wobei der Schraubverbinder Folgendes aufweist:
- einen zumindest teil- oder bereichsweise hohlen und im Wesentlichen zylinderförmigen Verbinderkörper zur Aufnahme von zu verbindenden Kabelenden; und
- Klemmschrauben, die in den Verbinderkörper quer oder senkrecht zu der Längserstreckungsrichtung des Verbinderkörpers eingeschraubt oder einschraubbar sind,
**dadurch gekennzeichnet, dass**
der Schraubverbinder eine Isolierkörperanordnung (1) aus einem ersten Isolierkörper (2) und einem hiervon separat ausgeführten zweiten Isolierkörper (3) aufweist, wobei der erste Isolierkörper (2) einen zumindest teil- und/oder bereichsweise hülsenförmigen Grundkörper (4) aus einem elektrisch isolierenden Material, insbesondere Kunststoffmaterial, aufweist, von welchem ein erster Bereich, insbesondere Endbereich, des Verbinderkörpers aufgenommen oder aufnehmbar ist, und wobei der zweite Isolierkörper (3) einen zumindest teil- und/oder bereichsweise hülsenförmigen Grundkörper (5) aus einem elektrisch isolierenden Material, insbesondere Kunststoffmaterial, aufweist, von welchem ein zweiter Bereich, insbesondere Endbereich, des Verbinderkörpers aufgenommen oder aufnehmbar ist.

2. Schraubverbinder nach Anspruch 1,
wobei der erste Isolierkörper (2) einen Verbindungsbereich (6) aufweist, welcher ausgebildet ist, mit einem Verbindungsbereich (7) des zweiten Isolierkörpers (3) eine kraft- und/oder formschlüssige und insbesondere lösbare Verbindung auszubilden.

3. Schraubverbinder nach Anspruch 2,
wobei der Verbindungsbereich (6) des ersten Isolierkörpers (2) zumindest teil- und/oder bereichsweise komplementär zu dem Verbindungsbereich (7) des zweiten Isolierkörpers (3) ausgeführt ist.

4. Schraubverbinder nach Anspruch 2 oder 3,
wobei zumindest in einem Zustand, wenn der erste Bereich, insbesondere Endbereich, des Verbinderkörpers von dem Grundkörper (4) des ersten Isolierkörpers (2) und der zweite Bereich, insbesondere Endbereich, des Verbinderkörpers von dem Grundkörper (5) des zweiten Isolierkörpers (3) aufgenommen ist, der Verbindungsbereich (6) des ersten Isolierkörpers (2) zumindest teil-und/oder bereichsweise koaxial und/oder konzentrisch zu dem Verbindungsbereich (7) des zweiten Isolierkörpers (3) ausgeführt ist.

5. Schraubverbinder nach einem der Ansprüche 2 bis 4,
wobei zumindest in einem Zustand, wenn der erste Bereich, insbesondere Endbereich, des Verbinderkörpers von dem Grundkörper (4) des ersten Isolierkörpers (2) und der zweite Bereich, insbesondere Endbereich, des Verbinderkörpers von dem Grundkörper (5) des zweiten Isolierkörpers (3) aufgenommen ist, der Verbindungsbereich (7) des ersten Isolierkörpers (2) zumindest teil-und/oder bereichsweise teleskopisch zu dem Verbindungsbereich (7) des zweiten Isolierkörpers (3) ausgeführt ist.

6. Schraubverbinder nach einem der Ansprüche 1 bis 5,
wobei der Grundkörper (4) des ersten Isolierkörpers (2) einen ersten Endbereich aufweist, welcher in einem Zustand, wenn der erste Bereich, insbesondere Endbereich des Verbinderkörpers von dem Grundkörper (4) des ersten Isolierkörpers (2) aufgenommen ist, in Richtung des zweiten Bereichs, insbesondere Endbereichs, des Verbinderkörpers zeigt bzw. sich in Richtung des zweiten Bereichs, insbesondere Endbereichs, des zweiten Verbinderkörpers erstreckt; und
wobei der Grundkörper (5) des zweiten Isolierkörpers (3) einen ersten Endbereich aufweist, welcher in einem Zustand, wenn der zweite Bereich, insbesondere Endbereich, des Verbinderkörpers von dem Grundkörper (5) des zweiten Isolierkörpers (3) aufgenommen ist, in Richtung des ersten Bereichs, insbesondere Endbereichs, des Verbinderkörpers zeigt bzw. sich in Richtung des ersten Bereichs, insbesondere Endbereichs des Verbinderkörpers erstreckt.

7. Schraubverbinder nach Anspruch 6,
wobei die Isolierkörperanordnung (1) derart ausgeführt ist, dass in einem Zustand wenn der erste Bereich, insbesondere Endbereich, des Verbinderkörpers von dem Grundkörper (4) des ersten Isolierkörpers (2) und der zweite Bereich, insbesondere Endbereich des Verbinderkörpers von dem Grundkörpers des zweiten Isolierkörpers (3) aufgenommen ist, der erste Endbereich des Grundkörpers (4) des ersten Isolierkörpers (2) an einen ersten Endbereich des Grundkörpers (5) des zweiten Isolierkörpers (3) anstößt oder unmittelbar angrenzt.

8. Schraubverbinder nach einem der Ansprüche 2 bis 7 und zumindest nach Anspruch 6 oder 7, wobei der Verbindungsbereich (6) des ersten Isolierkörpers (2) an dem ersten Endbereich des Grundkörpers (4) des ersten Isolierkörpers (2) ausgebildet und insbesondere angeformt ist und sich vorzugsweise in Richtung des zweiten Bereichs, insbesondere Endbereichs des Verbinderkörpers erstreckt; und/oder
wobei der Verbindungsbereich (7) des zweiten Isolierkörpers (3) an dem ersten Endbereich des Grundkörpers (5) des zweiten Isolierkörpers (3) ausgebildet und insbesondere angeformt ist und sich vorzugsweise in Richtung des ersten Bereichs, insbesondere Endbereichs, des Verbinderkörpers erstreckt.

9. Schraubverbinder nach einem der Ansprüche 2 bis 8 und zumindest nach einem der Ansprüche 6 bis 8, wobei der Verbindungsbereich (6) des ersten Isolierkörpers (2) als Steckverbindungsbereich insbesondere mit einer Bajonett-Verschlussanordnung ausgeführt ist, und wobei der Verbindungsbereich (7) des zweiten Isolierkörpers (3) zumindest teil- und/oder bereichsweise komplementär zu dem Steckverbindungsbereich und der Bajonett-Verschlussanordnung des Verbindungsbereichs (6) des ersten Isolierkörpers (2) ausgeführt ist.

10. Schraubverbinder nach einem der Ansprüche 1 bis 9,
wobei der Grundkörper (4) des ersten Isolierkörpers (2) derart ausgebildet ist, dass dieser insbesondere austauschbar auf den ersten Bereich, insbesondere Endbereich des Verbinderkörpers steckbar ist; und/oder
wobei der Grundkörper (5) des zweiten Isolierkörpers (3) derart ausgebildet ist, dass dieser insbesondere austauschbar auf den zweiten Bereich, insbesondere Endbereich, des Verbinderkörpers steckbar ist.

11. Schraubverbinder nach einem der Ansprüche 1 bis 10,
wobei in dem ersten Bereich des Verbinderkörpers ein quer oder senkrecht zur Schraubverbinder-Längsachse ausgeführter Schraubschacht ausgeführt ist, in den eine Klemmschraube eingeschraubt oder einschraubbar ist, und wobei in einer Mantelfläche des zumindest teil- und/oder bereichsweise hülsenförmigen Grundkörpers (4) des ersten Isolierkörpers (2) eine Durchgangsöffnung (8) ausgeführt ist, durch welche die Klemmschraube zum Einschrauben in den Schraubenschacht führbar oder über welche die Klemmschraube zum Einschrauben in den Schraubenschacht manipulierbar ist; und/oder
wobei in dem zweiten Bereich des Verbinderkörpers ein quer oder senkrecht zur Schraubverbinder-Längsachse ausgeführter Schraubschacht ausgeführt ist, in den eine Klemmschraube eingeschraubt oder einschraubbar ist, und wobei in einer Mantelfläche des zumindest teil- und/oder bereichsweise hülsenförmigen Grundkörpers (5) des zweiten Isolierkörpers (3) eine Durchgangsöffnung (9) ausgeführt ist, durch welche die Klemmschraube zum Einschrauben in den Schraubschacht führbar oder über welche die Klemmschraube zum Einschrauben in den Schraubschacht manipulierbar ist.

12. Schraubverbinder nach Anspruch 11,
wobei die Isolierkörperanordnung (1) derart ausgeführt ist, dass in einen Zustand, wenn der erste Bereich, insbesondere Endbereich, des Verbinderkörpers von dem Grundkörper (4) des ersten Isolierkörpers (2) und der zweite Bereich, insbesondere Endbereich, des Verbinderkörpers von dem Grundkörper (5) des zweiten Isolierkörpers (3) aufgenommen ist, die in der Mantelfläche des zumindest teil- und/oder bereichsweise hülsenförmigen Grundkörpers (4) des ersten Isolierkörpers (2) ausgeführte Durchgangsöffnung (8) mit dem in dem ersten Bereich des Verbinderkörpers ausgeführten Schraubschacht fluchtet, und die in der Mantelfläche des zumindest teil- und/oder bereichsweise hülsenförmigen Grundkörpers (5) des zweiten Isolierkörpers (3) ausgeführte Durchgangsöffnung (9) mit dem in dem zweiten Bereich des Verbinderkörpers ausgeführten Schraubschacht fluchtet.

13. Schraubverbinder nach einem der Ansprüche 1 bis 12,
wobei der zumindest teil- und/oder bereichsweise hülsenförmige Grundkörper (4) des ersten Isolierkörpers (2) an einem ersten Endbereich eine Aufnahmeöffnung aufweist, über welche der erste Bereich, insbesondere Endbereich, des Verbinderkörpers in den Grundkörper (4) des ersten Isolierkörpers (2) einführbar ist, und wobei der zumindest teil- und/oder bereichsweise hülsenförmige Grundkörper (4) des ersten Isolierkörpers (2) an einem dem ersten Endbereich gegenüberliegenden zweiten Endbereich eine Durchgangsöffnung (10) aufweist, durch welche ein Kabelende der beiden zu verbindenden Kabelenden führbar ist; und/oder
wobei der zumindest teil- und/oder bereichsweise hülsenförmige Grundkörper (5) des zweiten Isolierkörpers (3) an einem ersten Endbereich eine Aufnahmeöffnung aufweist, über welche der zweite Bereich, insbesondere Endbereich, des Verbinderkörpers in den Grundkörper (5) des zweiten Isolierkörpers (3) einführbar ist, und wobei der zumindest teil- und/oder bereichsweise hülsenförmige Grundkörper (5) des zweiten Isolierkörpers (3) an einem dem ersten Endbereich gegenüberliegenden zweiten Endbereich eine Durchgangsöffnung (11) aufweist, durch welche ein Kabelende der beiden zu verbindenden Kabelenden führbar ist.

14. Isolierkörperanordnung (1) für einen Schraubverbinder, insbesondere für einen Schraubverbinder nach einem der Ansprüche 1 bis 13, wobei die Isolierkörperanordnung (1) folgendes aufweist:
- einen ersten Isolierkörper (2); und
- einen von dem ersten Isolierkörper (2) separat ausgeführten zweiten Isolierkörper (3),
wobei der erste Isolierkörper (2) einen zumindest teil- und/oder bereichsweise hülsenförmigen Grundkörper (4) aus einem elektrisch isolierenden Material, insbesondere Kunststoffmaterial, aufweist, von welchem ein erster Bereich, insbesondere Endbereich, eines Verbinderkörpers des Schraubverbinders aufnehmbar ist, und wobei der zweite Isolierkörper (3) einen zumindest teil- und/oder bereichsweise hülsenförmigen Grundkörper (5) aus einem elektrisch isolierenden Material, insbesondere Kunststoffmaterial, aufweist, von welchem ein zweiter Bereich, insbesondere Endbereich, des Verbinderkörpers des Schraubverbinders aufnehmbar ist.

15. Isolierkörperanordnung (1) nach Anspruch 14,
wobei der erste Isolierkörper (2) einen Verbindungsbereich (6) aufweist, welcher ausgebildet ist, mit einem Verbindungsbereich (7) des zweiten Isolierkörpers (3) eine kraft- und/oder formschlüssige und insbesondere lösbare Verbindung auszubilden;
wobei der Verbindungsbereich (6) des ersten Isolierkörpers (2) vorzugsweise zumindest teil- und/oder bereichsweise komplementär zu dem Verbindungsbereich (7) des zweiten Isolierkörpers (3) ausgeführt ist; und/oder
wobei zumindest in einem Zustand, wenn der erste Bereich, insbesondere Endbereich, des Verbinderkörpers des Schraubverbinders von dem Grundkörper (4) des ersten Isolierkörpers (2) und der zweite Bereich, insbesondere Endbereich, des Verbinderkörpers des Schraubverbinders von dem Grundkörper (5) des zweiten Isolierkörpers (3) aufgenommen ist, der Verbindungsbereich (6) des ersten Isolierkörpers (2) vorzugsweise zumindest teil-und/oder bereichsweise koaxial und/oder konzentrisch zu dem Verbindungsbereich (7) des zweiten Isolierkörpers (3) ausgeführt ist; und/oder
wobei zumindest in einem Zustand, wenn der erste Bereich, insbesondere Endbereich, des Verbinderkörpers des Schraubverbinders von dem Grundkörper (4) des ersten Isolierkörpers (2) und der zweite Bereich, insbesondere Endbereich, des Verbinderkörpers des Schraubverbinders von dem Grundkörper (5) des zweiten Isolierkörpers (3) aufgenommen ist, der Verbindungsbereich (6) des ersten Isolierkörpers (2) vorzugsweise zumindest teil-und/oder bereichsweise teleskopisch zu dem Verbindungsbereich (7) des zweiten Isolierkörpers (3) ausgeführt ist; und/oder
wobei der Verbindungsbereich (6) des ersten Isolierkörpers (2) als Steckverbindungsbereich insbesondere mit einer Bajonett-Verschlussanordnung ausgeführt ist, und wobei der Verbindungsbereich (7) des zweiten Isolierkörpers (3) zumindest teil-und/oder bereichsweise komplementär zu dem Steckverbindungsbereich und der Bajonett-Verschlussanordnung des Verbindungsbereichs (6) des ersten Isolierkörpers (2) ausgeführt ist.
